# EUROPEAN PATENT APPLICATION

(11) **EP 2 482 493 A1**
(43) Date of publication of application: **01.08.2012**
(21) Application number: 11152378.3
(22) Date of filing: 27.01.2011
(51) Int. Cl.: H04L 12/26

(54) **Measuring CPE bandwidth**

(71) Applicant: TeliaSonera AB, 106 63 Stockholm (SE)
(72) Inventor: Korjonen, Antti-Jussi, 00051, SONERA (FI)
(74) Representative: Papula Oy

(57) **Abstract**

A method, a system and a computer program for measuring service quality in a data network (NW). The method comprises the steps of creating an interface (SIF) to the Gateway (PE) comprising a pre-defined IP address pointing to the Customer Premises Equipment (CPE); and the Customer Premises Equipment (CPE) comprising a return IP route to the Gateway (PE); creating a test data packet flood looping between the pre-defined IP address pointing to the Customer Premises Equipment (CPE) and the Gateway (PE), said test data packet flood consuming the available bandwidth between the Gateway (PE) and the Customer Premises Equipment (CPE); measuring the service quality from the amount of data carried by the looping test data packet that is received at the Gateway (PE) and the Customer Premises Equipment (CPE).

## Description

### FIELD OF THE INVENTION

The invention relates to measuring service quality in a data network, especially the bandwidth between the Gateway and the Customer Premises Equipment.

### BACKGROUND OF THE INVENTION

The service quality is measured in a data network for example to verify the Service Level Agreement (SLA) between the network operator and the customer or, from the operator's perspective, for capacity management or fault isolation purposes. It is also important to verify during the installation procedure of the Customer Premises Equipment or any new network connection that the bandwidth fulfills the customer's Service Level Agreement. The bandwidth measurement is one part of a typical Service Level Agreement between the customer and a network operator.

The network bandwidth may be measured with traditional probe devices, which are used locally at the customer's premises. Using the probe may be difficult, as the device has to be installed locally by a person working for the network operator, thus creating personnel costs, or the probe has to be shipped to the customer. Usually a free Ethernet port is required to install the probe to the Customer Premises Equipment.

The probe device generates downstream or upstream traffic and measures only generated traffic. If, for example, the customer is downloading a large FTP file, the probe test will not give the available maximum bandwidth. Additionally, the software running inside the router has similar problems as the separate probe, because the software running at the router is limited by the router CPU resources, which limits the bandwidth testing capabilities.

### PURPOSE OF THE INVENTION

The purpose of the invention is to introduce a method, a system and a computer program for measuring network bandwidth without the need for probe devices. The present invention reduces the costs required to verify the Service Level Agreement between the network operator and the customer.

### SUMMARY

The invention discloses a method and a system for measuring service quality in a data network, wherein the system comprises means for executing the steps of the method.

The data network comprises a network management system, a Gateway connected to the network management system and a Customer Premises Equipment connected to the Gateway. The network management system is connected to a network operator's network element. The Gateway is a router between one network operator's area and possible areas administered by other network operators. The gateway may be connected to the Customer Premises Equipment by an L3 type connection. A Customer Premises Equipment is a device that terminates Wide Area Network, WAN, to a Local Area Network, LAN.

An interface is created to the Gateway comprising a pre-defined IP address pointing to the Customer Premises Equipment. The interface may be provided according to Virtual Routing and Forwarding technology, VRF. The interface may be a subinterface according to MPLS (Multiprotocol Label Switching). A route is created from the Gateway to the Customer Premises Equipment. A test data packet flood is created between the Gateway and the pre-defined IP address pointing to the Customer Premises Equipment by the test data packet looping between the Gateway and the Customer Premises Equipment. This test data packet flood is arranged to consume essentially all available bandwidth between the Gateway and the Customer Premises Equipment within a pre-defined test period by looping the packet. The service quality is measured from the amount of data received at the Gateway and the Customer Premises Equipment. The amount of data comprises the data carried by the looping test data packet and possible other data traffic from the network. The other data traffic may be originated from customer's own network usage that takes place during the measurement procedure.

In one embodiment of the invention the test data packet flood is created by sending the test data packet from the network management system to the Gateway interface pointing to the pre-defined IP address. The test data packet is sent from the Gateway to the pre-defined IP address and received by the Customer Premises Equipment. The test data packet is sent back from the Customer Premises Equipment to the Gateway interface pointing to the pre-defined IP address, thereby creating a loop between the Gateway and the Customer Premises Equipment.

In one embodiment a Time To Live parameter, TTL, is set up for the test data packet. The number of passed data packets is calculated from the SNMP counter readings and the time elapsed during the looping of the test data packet. The Time To Live parameter is carried inside the test data packet.

In one embodiment analyzing the service quality comprises the steps of reading ifInOctets at the Gateway for the interface logically connected to the Customer Premises Equipment, thereby acquiring the amount of data received at the Gateway, and reading ifInOctets at the Customer Premises Equipment for the interface logically connected to the Gateway, thereby acquiring the amount of data received at the Customer Premises Equipment. The ifInOctets is a counter function used for example with SNMP, Simple Network Management Protocol.

In one embodiment the test data packet is a UDP packet (UDP, User Datagram Protocol). The UDP protocol provides a procedure for application programs to send messages to other programs with a minimum of protocol mechanism. The protocol is transaction oriented, and delivery and duplicate protection are not guaranteed. By using only UDP packets, any simultaneous IP traffic may pass through and customer's own network activities using IP are not fully stopped.

In one embodiment the minimum size of the UDP packet is defined by the capability of consuming the available bandwidth between the Gateway and the Customer Premises Equipment and the maximum size by not fragmenting while looping between the Gateway and the Customer Premises Equipment. Any smaller data packet would not flood the transmission path entirely and it would not be possible to achieve the maximum transmission rate of the network, resulting to a false measurement result. If the UDP packet is too large, either the Customer Premises Equipment or the Gateway router could become congested for the lack of central processing power. Too large a test data packet may become fragmented at some of the network elements. The fragmentation means that the packet would no longer proceed through all network elements and the method would not function. The actual size of the test data packet depends on the capabilities of the elements on the transmission path and may have to be defined by testing with different packet sizes. The packet size testing procedure may be an automated process. The purpose of the arrangement is to test the transmission path between the Gateway and the Customer Premises Equipment. By arranging the size of the test packet to a suitable level and limiting the requirements only to the routing function - for which routers are optimized - routers are capable to flood the available bandwidth entirely.

The network management system, the Gateway and the Customer Premises Equipment comprise at least one processor and at least one memory including computer program code. The at least one memory and the computer program code are configured, with the at least one processor, to cause these devices to perform according to the method described herein.

The benefit of the invention is that the Customer Premises Equipment bandwidth can be measured both upstream and downstream without installing any probes. There is also no need for a sophisticated packet generator, because the tester traffic will loop between the Customer Premises Equipment and the Gateway. The logistics for installing a new Customer Premises Equipment is more economical.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** is a block diagram of an example embodiment of the present invention, and
**Fig. 2** is a flow chart of an example embodiment of the invention.

### DETAILED DESCRIPTION OF THE INVENTION

Reference will now be made in detail to the embodiments of the present invention, examples of which are illustrated in the accompanying drawings.

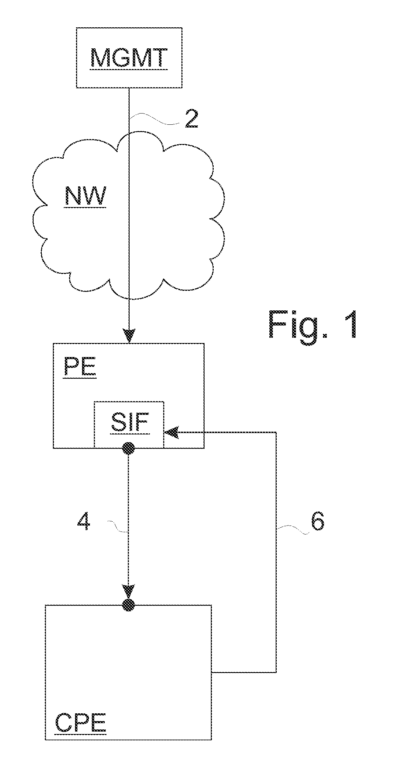

In figure 1 a block diagram of an example embodiment of the invention illustrates the elements for creating the packet and initiating the packet loop. A network management system MGMT may comprise a network operator's management environment or a smaller device that has only a limited set of functions. The network management system MGMT comprises a packet generator, which may be implemented by hardware or software. In one embodiment generating the packet is implemented by iPerf software installed to the network management system MGMT. The Network management system MGMT may also comprise tools for analyzing the measurement result.

The network management system MGMT generates the test data packet and sends at least one packet to the Gateway PE via a data network NW, arrow 2. The data network NW may be operated by the network operator. In one embodiment the Gateway PE is a Provider Edge, which is a router located at the outer edge of the network operator's own network. The Gateway PE may be capable of utilizing several network protocols, such as Multiprotocol Label Switching (MPLS) or similar.

The Gateway PE comprises an interface SIF, which is pointing to the Customer Premises Equipment CPE. The Customer Premises Equipment CPE comprises a default route to the Gateway for all packets that cannot be addressed within the LAN network connected to the Customer Premises Equipment CPE. The Gateway PE is connected to the Customer Premises Equipment CPE by an L3 type connection. The transmission path may comprise Metro Ethernet or DSLAM devices.

In one embodiment the Gateway PE send a streaming flow of test data packets, arrow 4, thereby creating a flow to the Gateway PE in order to fully flood the transmission path between the Gateway PE and the Customer Premises Equipment CPE. The Customer Premises Equipment CPE may receive also other data with the test data packet. The Customer Premises Equipment comprises a function for measuring the received data. The measurement result comprises both the test data packets and the other data.

The Customer Premises Equipment CPE returns the test data packets to the Gateway PE, arrow 6. The Gateway PE comprises a function for measuring the received data. The measurement data may comprise the test data packets and other data received by the port. One example of such measurement function is the ifInOctets used at SNMP.

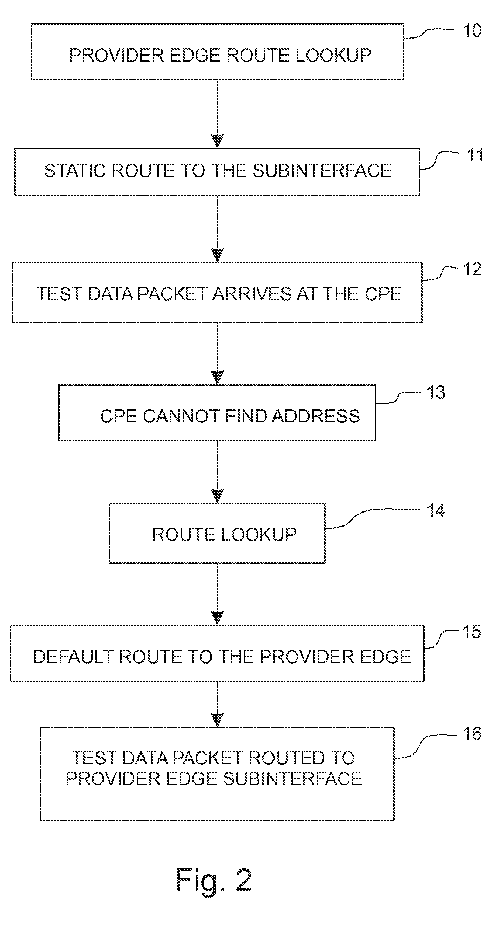

Figure 2 is a flow chart of an example embodiment of the invention. In the following paragraphs the Gateway PE comprises an interface SIF pointing to the Customer Premises Equipment CPE, wherein the address of the Gateway PE is 10.10.10.1/30 and that of the Customer Premises Equipment CPE is 10.10.10.2/30.

The network management system sends a UDP packet to the Gateway PE using Virtual Routing and Forwarding. The Gateway PE is a Provider Edge in this example. The process starts by a Provider Edge PE route lookup, block 10.

The Provider Edge comprises a static route to the interface SIF, block 11, routing the test data packet to the Customer Premises Equipment CPE. The routing command may be as follows:
ip route vrf test 172.22.1.81 255.255.255.255 10.10.10.2

The IP address 172.22.1.81 is the pre-defined address used to route the packet onwards from the

Customer Premises Equipment CPE. The pre-defined IP address can be a part of the IP address space reserved for testing purposes only, and it should not point to any device within the address space of the Customer Premises Equipment CPE. This may be one host route that is not utilized in any other application.

The test data packet arrives at the Customer Premises Equipment CPE, block 12. As the CPE cannot find the address, block 13, it executes a route lookup, block 14. As there is no IP address that relates to the pre-defined IP address, the CPE reverts to the default route which is set to the Provider Edge PE, block 15. The default route is configured to the Customer Premises Equipment CPE before delivering it to the customer or it may be later configured by the network management system. In one embodiment the CPE sends to the network management system an ICMP unreachable message, if the CPE is the target for the UDP stream. The routing command may be as follows:
ip route 0.0.0.0 0.0.0.0 10.10.10.1

The test data packet is routed towards the Provider Edge interface SIF 10.10.10.1, block 16. This returns the process to block 10 and the test data packet starts to loop between the Provider Edge PE and the Customer Premises Equipment CPE.

The size of the test data packet must be large enough to consume all available bandwidth by looping. If the size is too small, then the processing speed of one of the network elements becomes a significant factor and may act as a bottleneck. On the other hand, too large a test data packet may become fragmented. In one embodiment the "Do not fragment" flag is set, thus preventing looping the fragmented packet. An example test data packet size is 5 megabytes/second, which fulfills this criterion for a 100/100 megabit network connection.

Any network attacks are prohibited by restricting the usage to VRF, where the VPN connection between the network management system and the Gateway PE is closed from unauthorized use.

The Customer Premises Equipment CPE may have asymmetric upstream and downstream connections rates. Either connection may become a bottleneck for consuming the available bandwidth for the other connection when using only one test data packet. This is avoided by sending several test data packets continuously from the network management system MGMT to the Gateway PE, thereby assuring that the downstream connection for the Customer Premises Equipment CPE is fully flooded.

The measurement procedure begins by sending a constant feed of test data packets to the Gateway PE, which starts the looping of test data packets. The full bandwidth flooding may occur only after several seconds. Therefore the best result is achieved when the measurement starts by registering the initial values of ifInOctets from the Gateway PE and the Customer Premises Equipment CPE after initial setting time. The flooding does not usually begin immediately, the measurement result improves after leaving the process some time to set. This setting time may vary from couple of seconds to few minutes; it can be adjusted after the statistical analysis of several measurement results appears to be reliable. Similar wait time is expected for the end values of ifInOctets, in other words the end values of ifInOctets from the Gateway PE and the Customer Premises Equipment CPE are read before stopping the feed of test data packets.

The end value and the initial value of ifInOctets may be subtracted from each other and the result may be divided by the time used between registering both values. This calculation results the in measuring the service quality and the actual bandwidth available both downstream and upstream for the Customer Premises Equipment CPE.

It is obvious to a person skilled in the art that with the advancement of technology, the basic idea of the invention may be implemented in various ways. The invention and its embodiments are thus not limited to the examples described above; instead, they may vary within the scope of the claims.

## Claims

1. A method for measuring service quality in a data network comprising a network management system (MGMT), a Gateway (PE) connected to the network management system (MGMT) and a Customer Premises Equipment (CPE) connected to the Gateway (PE), **characterized in that** the method comprises the steps of:
creating an interface (SIF) to the Gateway (PE) comprising a pre-defined IP address pointing to the Customer Premises Equipment (CPE); and
the Customer Premises Equipment (CPE) comprising a return IP route to the Gateway (PE);
creating a test data packet flood looping between the pre-defined IP address pointing to the Customer Premises Equipment (CPE) and the Gateway (PE), said test data packet flood consuming the available bandwidth between the Gateway (PE) and the Customer Premises Equipment (CPE);
measuring the service quality from the amount of data received at the Gateway (PE) and at the Customer Premises Equipment (CPE).

2. The method according to claim 1, **characterized in that** creating the test data packet flood comprises the steps of:
sending the test data packet from the network management system to the Gateway interface (SIF) pointing to the pre-defined IP address;
sending the test data packet from the Gateway (PE) to the pre-defined IP address and receiving it by the Customer Premises Equipment (CPE);
sending the test data packet from the Customer Premises Equipment (CPE) to the Gateway interface (SIF) pointing to the pre-defined IP address, thereby creating a loop between the Gateway (PE) and the Customer Premises Equipment (CPE).

3. The method according to claim 2, **characterized in that** the method comprises the steps of:
setting up a Time To Live parameter for the test data packet; and
calculating the number of passed data packets from the SNMP counter readings and the time elapsed during the looping of the test data packet.

4. The method according to claim 3, **characterized in that** analyzing the service quality comprises the steps of:
reading ifInOctets at the Gateway (PE) for the interface (SIF) logically connected to the Customer Premises Equipment (CPE), thereby acquiring the amount of data received at the Gateway (PE);
reading ifInOctets at the Customer Premises Equipment (CPE) for the interface (SIF) logically connected to the Gateway (PE), thereby acquiring the amount of data received at the Customer Premises Equipment (CPE).

5. The method according to any of claims 1 to 4, **characterized in that** the test data packet is a UDP packet.

6. The method according to claim 5, **characterized in that** the minimum size of the UDP packet is defined by the capability of consuming the available bandwidth between the Gateway (PE) and the Customer Premises Equipment (CPE) and the maximum size by not fragmenting while looping between the Gateway (PE) and the Customer Premises Equipment (CPE).

7. A system for measuring service quality in a data network comprising a network management system, a Gateway (PE) connected to the network management system and a Customer Premises Equipment (CPE) connected to the Gateway (PE), **characterized in that** the system comprises:
means for creating an interface (SIF) to the Gateway (PE) comprising a pre-defined IP address pointing to the Customer Premises Equipment (CPE); and
the Customer Premises Equipment (CPE) comprising a return IP route to the Gateway (PE);
means for creating a test data packet flood looping between the pre-defined IP address at the Customer Premises Equipment (CPE) and the Gateway (PE), said test data packet flood consuming the available bandwidth between the Gateway (PE) and the Customer Premises Equipment (CPE);
means for measuring the service quality from the amount of data received at the Gateway (PE) and at the Customer Premises Equipment (CPE).

8. The system according to claim 7, **characterized in that** the means for creating the test data packet flood comprises:
means for sending the test data packet from the network management system to the Gateway interface (SIF) pointing to the pre-defined IP address;
means for sending the test data packet from the Gateway (PE) to the pre-defined IP address and receiving it by the Customer Premises Equipment (CPE);
means for sending the test data packet from the Customer Premises Equipment (CPE) to the Gateway interface (SIF) pointing to the pre-defined IP address, thereby creating a loop between the Gateway (PE) and the Customer Premises Equipment (CPE).

9. The system according to claim 8, **characterized in that** the system comprises:
means for setting up a Time To Live parameter for the test data packet; and
means for calculating the number of passed data packets from the SNMP counter readings and the time elapsed during the looping of the test data packet.

10. The system according to claim 9, **characterized in that** means for analyzing the service quality comprises:
means for reading ifInOctets at the Gateway (PE) for the interface (SIF) logically connected to the Customer Premises Equipment (CPE), thereby acquiring the amount of data received at the Gateway (PE);
means for reading ifInOctets at the Customer Premises Equipment (CPE) for the interface (SIF) logically connected to the Gateway (PE), thereby acquiring the amount of data received at the Customer Premises Equipment (CPE).

11. The system according to any of claims 7 to 10, **characterized in that** the test data packet is a UDP packet.

12. The system according to claim 11, **characterized in that** the minimum size of the UDP packet is defined by the capability of consuming the available bandwidth between the Gateway (PE) and the Customer Premises Equipment (CPE) and the maximum size by not fragmenting while looping between the Gateway (PE) and the Customer Premises Equipment (CPE).

13. The computer program according to any of the method claims 1 to 6, wherein the computer program is a computer program product comprising a computer-readable medium bearing computer program code embodied therein for use with a computer.
